# EUROPÄISCHE PATENTSCHRIFT

(11) **EP 0 991 727 B1**
(45) Veröffentlichungstag und Bekanntmachung des Hinweises auf die Patenterteilung: **11.02.2004**
(21) Anmeldenummer: 99920774.9
(22) Anmeldetag: 22.04.1999
(51) Int. Cl.: C09D 4/00, C09D 4/06, C09D 175/14, C08F 290/14, C08F 290/06, C08F 220/26

(54) **VERWENDUNG EINES STRAHLENHÄRTBAREN BESCHICHTUNGSMITTELS ZUR HERSTELLUNG VON MEHRSCHICHTLACKIERUNGEN IN DER FAHRZEUGLACKIERUNG**
USE OF RADIATION-CURABLE COATINGS FOR PRODUCING MULTILAYER COATINGS IN VEHICLE FINISHING
UTILISATION DES AGENTS DE REVETEMENT DURCISSABLES PAR RAYONNEMENT POUR LA PRODUCTION DES PEINTURES A PLUSIEURS COUCHES A L'INDUSTRIE D'AUTOMOBILES

(30) Priorität: 27.04.1998 DE 19818735
(43) Veröffentlichungstag der Anmeldung: 12.04.2000
(73) Patentinhaber: E.I. DU PONT DE NEMOURS AND COMPANY, Wilmington Delaware 19898 (US)
(72) Erfinder: FLOSBACH, Carmen, D-42287 Wuppertal (DE); LÖFFLER, Helmut, D-50321 Brühl (DE); MAAG, Karin, D-45721 Haltern (DE)
(74) Vertreter: Hrabal, Ulrich
(86) Internationale Anmeldenummer: PCT/EP1999/002780
(87) Internationale Veröffentlichungsnummer: WO 1999/055785

(56) Entgegenhaltungen:
- EP-A- 0 000 407
- WO-A-96/11217
- DE-A- 3 613 082
- DE-A- 3 628 124

## Beschreibung

Die Erfindung betrifft mittels energiereicher Strahlung härtbare Beschichtungsmittel zur Verwendung in einem Verfahren zur Herstellung von Mehrschichtlackierungen auf dem Gebiet der Fahrzeuglackierung, insbesondere der Fahrzeugreparaturlackierung.

Es ist bereits bekannt, in der Fahrzeuglackierung mittels energiereicher Strahlung härtbare Beschichtungsmittel einzusetzen. Man nutzt auch hier die Vorteile strahlenhärtbarer Beschichtungsmittel, wie z.B. die sehr kurzen Härtungszeiten, die geringe Lösemittelemission der Beschichtungsmittel sowie die gute Härte der daraus erhaltenen Beschichtungen.

So beschreibt die DE-A-196 35 447 ein Verfahren zur Herstellung einer mehrschichtigen Reparaturlackierung, wobei als Klarlack bzw. pigmentierter Decklack ein Beschichtungsmittel appliziert wird, daß ausschließlich durch UV-Strahlung radikalisch polymerisierbare Bindemittel enthält.

In der EP-A-0 000 407 werden strahlenhärtbare Überzugsmittel beschrieben auf der Basis eines mit Acrylsäure veresterten OH-funktionellen Polyesterharzes, einer Vinylverbindung, eines Photoinitiators und eines Polyisocyanates.

Weiterhin beschreibt die US-A-4 668 529 ein mittels UV-Strahlung härtbares 1K-Füllerbeschichtungsmittel für die Reparaturlackierung. Als UV-härtbare Bindemittelkomponenten werden Tripropylenglykoldiacrylat und Trimethylolpropantriacrylat eingesetzt. Zusätzlich ist ein Epoxidharz auf der Basis eines Bisphenol A-Diglycidylethers enthalten.

In der noch nicht offengelegten deutschen Patentanmeldung P 197 09 560 wird ein Klarlackbeschichtungsmittel für die Fahrzeuglackierung beschrieben, welches mittels energiereicher Strahlung härtbare Bindemittel und zusätzlich ein durch Additionsund/oder Kondensationsreaktionen härtbares Bindemittelsystem, das frei von radikalisch polymerisierbaren Doppelbindungen ist, enthält.

Weiterhin wird in der WO-A-98/00456 ein Bindemittelsystem genannt, welches OH-, NH₂-, COOH-, NCO- oder epoxyfunktionelle Verbindungen mit mindestens einer radikalisch polymerisierbaren olefinischen Doppelbindung, Photoinitiatoren und ein Bindemittelsystem auf der Basis Polyacrylat- und/oder Polyesterpolyol mit Melaminharz oder mit gegebenenfalls blockierten Polyisocyanaten oder auf der Basis carboxyl-, anhydrid- oder aminofunktioneller Polyester und/oder Polyacrylate mit epoxyfunktionellen Polyestern und/oder Polyacrylaten enthält.

Die DE-A-28 09 715 beschreibt mittels energiereicher Strahlung härtbare Bindemittel auf der Basis einer NCO-funktionellen Urethanverbindung, hergestellt aus einem Hydroxyalkylester der (Meth)acrylsäure und einem Polyisocyanat, und auf der Basis einer polyfunktionellen Hydroxylverbindung.

Die genannten mittels energiereicher Strahlung härtbaren Beschichtungsmittel des Stands der Technik bzw. die daraus formulierten Beschichtungsmittel ergeben Überzüge, die noch in mehrfacher Hinsicht verbesserungsbedürftig sind. Die Überzüge zeigen Schwächen bezüglich Kratzfestigkeit, Lösemittel- und Chemikalienbeständigkeit sowie Schleifbarkeit. Sie erfüllen nicht in allen Punkten die Anforderungen, die in der Fahrzeuglackierung, insbesondere der Fahrzeugreparaturlackierung, an einen Mehrschichtaufbau gestellt werden. Insbesondere kommt es bei den mittels energiereicher Strahlung härtbaren Beschichtungsmitteln durch den Härtungsprozeß zu einem Volumenschrumpf der aufgebrachten Beschichtung, was zu Spannungen und Rißbildung im Film führt. Es kommt zu Enthaftungserscheinungen zum Untergrund. Das Problem der Rißbildung kann zwar mit den bekannten Beschichtungsmitteln, die zusätzlich zu den strahlenhärtbaren Bindemitteln noch weitere chemisch vernetzende Bindemittelkomponenten enthalten, gemindert werden, eine zufriedenstellende Lösung bezüglich der Rißbildung und der unzureichenden Zwischenschichthaftung ist jedoch noch nicht gegeben.

Aufgabe der Erfindung war es, Beschichtungsmittel auf der Basis von mittels energiereicher Strahlung härtbaren Bindemitteln zur Herstellung einer mehrschichtigen Lackierung bereitzustellen, welche Überzüge mit sehr guter Chemikalien-, Benzinund Lösemittelbeständigkeit, hoher Kratzfestigkeit sowie guter und rascher Schleifbarkeit ergeben und welche bezüglich dieser Eigenschaften den Anforderungen an eine Mehrschichtlackierung auf dem Gebiet der Fahrzeuglackierung, insbesondere der Fahrzeugreparaturlackierung genügen. Die Überzüge sollen außerdem frei sein von Rißbildungen und eine gute Haftung zum Untergrund aufweisen. Weiterhin sollen sie ein einwandfreies optisches Aussehen zeigen.

Die Aufgabe wird gelöst durch die Verwendung eines mittels energiereicher Strahlung härtbaren Beschichtungsmittels, enthaltend
A) ein oder mehrere radikalisch polymerisierbare Doppelbindungen aufweisende (meth)acryloyl funktionnelle oligomere und/oder polymere Verbindungen auf Basis von Poly(meth)acrylaten, Polyurethanen, Polyestern, Polyesterurethanen und/oder Epoxidharz, die zusätzlich mindestens eine weitere im Sinne einer Additions- und/oder Kondensationsreaktion reaktive funktionelle Gruppe enthalten,
B) ein oder mehrere radikalisch polymerisierbare Doppelbindungen aufweisende (meth) acryloyl funktionelle oligomere und/oder polymere Verbindungen auf Basis von Poly(meth)acrylaten, Polyurethanen, Polyestern, Polyesterurethanen und/oder Epoxidharz, die zusätzlich mindestens eine weitere im Sinne einer Additions- und/oder Kondensationsreaktion reaktive funktionelle Gruppe enthalten, wobei die zusätzliche reaktive funktionelle Gruppe komplementär bzw. reaktiv ist gegenüber den zusätzlichen reaktiven funktionellen Gruppen der Komponente A),
C) gegebenenfalls mindestens eine monomere, oligomere und/oder polymere Verbindung mit mindestens einer gegenüber den zusätzlich zu den radikalisch polymerisierbaren Doppelbindungen vorhandenen funktionellen Gruppen aus Komponente A) oder Komponente B) im Sinne einer Additions- und/oder Kondensationsreaktion reaktiven funktionellen Gruppe,
D) ein oder mehrere Photoinitiatoren sowie
E) gegebenenfalls Lösemittel, Wasser, Pigmente und/oder Füllstoffe sowie lackübliche Additive,
in einem Verfahren zur Herstellung von Mehrschichtlackierungen bei der Fahrzeuglackierung.

Die Beschichtungsmittel basieren auf einem kombinierten Vernetzungsmechanismus aus mittels energiereicher Strahlung ausgelöster radikalischer Polymerisation und einer weiteren Vernetzungsreaktion über eine Additions- und/oder Kondensationsreaktion. Die mittels energiereicher Strahlung härtbaren Bindemittel tragen deshalb neben den radikalisch polymerisierbare Doppelbindungen enthaltenden Gruppen noch zusätzliche im Sinne einer Additionsund/oder Kondensationsreaktion reaktive Gruppen. Die Komponente B) trägt dabei die zur Komponente A) komplementären bzw. reaktiven Gruppen. Es können dabei jeweils auch verschiedenartige funktionelle Gruppen in einer Komponente vorhanden sein, sofern Verträglichkeit besteht.

Mit der Komponente C) steht eine weitere reaktive Komponente zur Verfügung, welche im Sinne einer Additions- und/oder Kondensationsreaktion reaktive funktionelle Gruppen enthält, welche mit den neben den radikalisch polymerisierbaren Doppelbindungen zusätzlich vorliegenden funktionellen Gruppen von Komponente A) oder B) reagieren können. Die Komponente C) enthält keine radikalisch polymerisierbaren Doppelbindungen.

Die im Sinne einer Additions- und/oder Kondensationsreaktion reaktiven funktionellen Gruppen von Komponente A), B) und C) müssen so ausgewählt werden, daß sie nicht reaktiv sind mit den die polymerisierbaren Doppelbindungen tragenden Gruppen von Komponente A) und B).

Bei den im Sinne einer Additions- und/oder Kondensationsreaktion reaktiven funktionellen Gruppen der Komponente A), B) und C) kann es sich um Hydroxyl,-Isocyanat-, Amino- Anhydrid-, Carboxyl- oder Epoxidgruppen handeln. Im Falle von Aminogruppen müssen diese aufgrund ihrer Reaktivität mit radikalisch polymerisierbaren Doppelbindungen in Form von (Meth)acryloylgruppen in blockierter Form, z.B. mit Ketonen oder Aldehyden blockiert, vorliegen.

Bei der Komponente A) der Beschichtungsmittel handelt es sich um Verbindungen mit einer oder mehreren radikalisch polymerisierbaren Doppelbindungen. Bevorzugt liegen in diesen Verbindungen die radikalisch polymerisierbaren Doppelbindungen in Form von (Meth)acryloylgruppen vor. (Meth)acryloyl bzw. (Meth)acryl bedeuten hier und im folgenden Acryloyl und/oder Methacryloyl bzw. Acryl und/oder Methacryl. Bevorzugt sind mindestens zwei polymerisierbare Doppelbindungen in Form von (Meth)acryloylgruppen im Molekül enthalten, beispielsweise 2 bis 20, bevorzugt 2 bis 10 (Meth)acryloylgruppen.

Bei der Komponente A) handelt es sich um (meth)acrylolyfunktionelle oligomere und/oder polymere Verbindungen auf Poly(meth)acrylat-, Polyurethan-, Polyester-, Polyesterurethan- und/oder Epoxidharzbasis. Die zahlenmittlere Molmasse dieser Verbindungen kann beispielsweise bei 300 bis 10000, bevorzugt 800 bis 10000 liegen. Die (meth)acryloylfunktionellen Verbindungen enthalten mindestens eine weitere im Sinne einer Additions- und/oder Kondensationsreaktion reaktive funktionelle Gruppe. Die reaktive funktionelle Gruppe kann ausgewählt sein aus einer Hydroxyl-, Isocyanat-, Epoxid-, Anhydrid-, Carboxyl- oder einer blockierten Aminogruppe.

Besonders bevorzugt handelt es sich bei den reaktiven Gruppen um Hydroxyl- oder Isocyanatgruppen. Werden hydroxyfunktionelle (meth)acryloylgruppenhaltige Verbindungen als Komponente A) eingesetzt, so können diese Verbindungen beispielsweise eine OH-Zahl von 20 bis 200, bevorzugt 30 bis 150, aufweisen. Werden isocyanatfunktionelle (meth)acryloylgruppenhaltige Verbindungen als Komponente A) eingesetzt, so können diese Verbindungen einen NCO-Gehalt von beispielsweise 2 - 30 Gew.-% aufweisen.

Die bevorzugt radikalisch polymerisierbare Doppelbindungen in Form von (Meth)acryloylgruppen enthaltenden Verbindungen der Komponente A) können nach üblichen Methoden beispielsweise durch Umsetzung von Di- oder Polyepoxiden, glycidylfunktionellen Polyestern, Polyurethanen und/oder Poly(meth)acrylaten mit (Meth)acrylsäure erhalten werden. Diese und weitere Herstellungsmethoden sind in der Literatur beschrieben und dem Fachmann bekannt.

(Meth)acryloylfunktionelle Poly(meth)acrylate können beispielsweise aus glycidylfunktionellen Poly(meth)acrylaten durch Umsetzung mit (Meth)acrylsäure unter Öffnung des Oxiranringes hergestellt werden.

Die (meth)acryloylfunktionellen Poly(meth)acrylate enthalten weitere reaktive funktionelle Gruppen. Bevorzugt handelt es sich hierbei um Hydroxyl- oder Isocyanatgruppen. Die wie vorstehend beschrieben hergestellten Poly(meth)acrylate enthalten bereits Hydroxylgruppen, die bei der Öffnung des Oxiranringes entstanden sind.

Eine andere Möglichkeit Hydroxylgruppen in die (meth)acryloylfunktionellen Poly(meth)acrylate einzuführen, besteht darin, als Ausgangsprodukte hydroxyfunktionelle Poly(meth)acrylate einzusetzen und die Hydroxylgruppen mit (Meth)acrylsäure zu verestern bzw. mit (Meth)acrylsäurealkylestern, wie z.B. (Meth)acrylsäuremethyl-, ethyl- oder propylestem, umzuestern, und zwar in solchen stöchiometrischen Mengen, daß im Endprodukt noch freie Hydroxylgruppen vorliegen. Bei dieser Herstellungsmethode liegen dann im Endprodukt Hydroxyl- und (Meth)acryloylgruppen vor.

Sollen die (meth)acryloylfunktionellen Poly(meth)acrylate Isocyanatgruppen enthalten, dann besteht die Möglichkeit, die bei der Herstellung durch Öffnung des Oxiranringes bzw. durch Copolymerisation mit hydroxyfuntionellen (Meth)acrylaten entstandenen Hydroxylgruppen mit Polyisocyanaten, bevorzugt mit Diisocyanaten, im Überschuß umzusetzen. Als Diisocyanate sind beliebige organische aromatische, aliphatische und/oder cycloaliphatische Diisocyanate einzeln oder in Kombination einsetzbar. Es kann sich beispielsweise auch um sterisch gehinderte Diisocyanate und Ether- oder Estergruppen enthaltende Diisocyanate handeln. Beispiele für geeignete Diisocyanate sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, 1-Isocyanatomethyl-5-isocyanato-1,3,3-trimethylcyclohexan, Bis-(4-isocyanatocyclohexyl)methan, Bis-(4-isocyanato-phenyl)-methan, Norbonendiisocyanat, 4,4-Diisocyanato-diphenylether, 1,5-Dibutylpentamethylendiisocyanat, Tetramethylxylylendiisocyanat, 2,3-Bis-(8-isocyanatooctyl)-4-octyl-5-hexylcyclohexan, 3(4)-Isocyanatomethyl-1-methylcyclohexylisocyanat, und/oder 2,6-Diisocyanatomethyl-capronat.

Bevorzugt eingesetzt werden aliphatische und/oder cycloaliphatische Diisocyanate mit 4 bis 25, vorzugsweise 6 bis 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten. Das Grundgerüst kann aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, Bis-(4-isocyanatocyclohexyl)methan, 1,1,6,6-Tetramethyl-hexamethylendiisocyanat, 1,5-Dibutyl-pentamethylendiisocyanat, 3(4)-Isocyanatomethyl-1-methyl-cyclohexylisocyanat, p- und m-Tetramethylxylylendiisocyanat und/oder die entsprechenden hydrierten Homologen. Es ist jedoch auch möglich anstelle der Diisocyanate höherfunktionelle Isocyanate einzusetzen. Beispielsweise können die Biuret-, Isocyanurat- oder Urethangruppen aufweisenden Derivate der oben genannten Diisocyanate eingesetzt werden.

Als Komponente A) sind ebenfalls (meth)acryloylfunktionelle oligomere und/oder polymere Urethanverbindungen mit mindestens einer weiteren funktionellen im Sinne einer Additions- und/oder Kondensationsreaktion reaktiven Gruppe einsetzbar. Diese Polyurethane werden in üblicher dem Fachmann bekannter Weise hergestellt. Beispielsweise können sie erhalten werden, indem zunächst (meth)acryloylfunktionelle Polyurethane in üblicher Weise, beispielsweise durch Umsetzung von Polyolen mit Polyisocyanaten und hydroxyfunktionellen (Meth)acrylsäureestern hergestellt werden. Bei den Polyolen handelt es sich beispielsweise um die üblichen zur Herstellung von Polyurethanen einsetzbaren Polyhydroxyverbindungen. Beispiele für solche Polyole sind Polyester-, Polyurethan-, Polyesterurethan-, Polyacrylat-, Polyether- und Polycarbonatpolyole. Als Polyole sind auch niedermolekulare mehrwertige Alkohole beispielsweise mit einer Molmasse von 60 bis 400 einsetzbar. Beispiele hierfür sind Butandiol-1,4, Pentandiol-1,6, Hexandiol-1,6, Neopentylglykol, Trimethylolpropan.

Beispiele für geeignete Diisocyanate sind vorstehend bereits genannt worden.
Beispiele für hydroxyfunktionelle (Meth)acrylsäureester sind Hydroxymethyl(meth)acrylat, Hydroxyethyl(meth)acrylat, Hydroxypropyl(meth)acrylat und Butandiolmonoacrylat.

Als Komponente A) sind auch (meth)acryloylfunktionelle Urethanverbindungen einsetzbar, bei denen es sich um Reaktionsprodukte aus Polyisocyanaten und hydroxyfunktionellen (Meth)acrylsäureestern handelt.

Um die (meth)acryloylfunktionellen Polyurethane mit weiteren funktionellen Gruppen zu versehen, gibt es verschiedene Möglichkeiten. Um Hydroxylgruppen einzuführen ist es z.B. möglich, die vorstehend genannten Ausgangsprodukte, Polyisocyanat, Polyol und hydroxyfunktioneller (Meth)acrylsäureester, in solchen Mengen einzusetzen, daß ein Überschuß an Hydroxylgruppen vorliegt. Die einzusetzende Menge an Hydroxykomponenten ist dann so zu bemessen, daß die gewünschte Hydroxylzahl erreicht wird. Weiterhin können beispielsweise die Polyisocyanate mit den Polyolen im Überschuß umgesetzt werden und anschließend wird dieses OH-funktionelle Polyurethanprepolymer mit (Meth)acrylsäure verestert oder mit (Meth)acrylsäureestern umgeestert und zwar in einem solchen Verhältnis, daß im Endprodukt noch Hydroxylgruppen vorhanden sind.

Generell besteht auch die Möglichkeit, von glycidylfunktionellen Polyurethanen auszugehen und die Glycidylgruppen mit (Meth)acrylsäure umzusetzen. Bei der Ringöffnung der Oxirangruppe entstehen dann die gewünschten Hydroxylgruppen.

Um in die (meth)acryloylfunktionellen Polyurethane Isocyanatgruppen einzuführen, können beispielsweise Polyisocyanat, Polyol und hydroxyfunktionelle (Meth)acrylsäureester in solchen Mengen eingesetzt werden, daß im Endprodukt noch freie Isocyanatgruppen vorliegen. So ist es möglich, Polyol mit Polyisocyanat im Überschuß umzusetzen und anschließend einen Teil der noch vorhandenen Isocyanatgruppen mit hydroxyfunktionellen (Meth)acrylsäureestem umzusetzen. Weiterhin besteht die Möglichkeit, hydroxyfunktionelle (Meth)acrylsäureester mit Polyisocyanaten zu NCO-haltigen Urethanverbindungen umzusetzen.

Als Komponente A) geeignet sind weiterhin (meth)acryloylfunktionelle Polyester mit mindestens einer weiteren funktionellen im Sinne einer Additions- und/oder Kondensationsreaktion reaktiven Gruppe. Die funktionalisierten Polyester können in üblicher dem Fachmann bekannter Weise hergestellt durch Polykondensation hergestellt werden. Beispielsweise können für die Polyesterherstellung geeignete übliche Polyole, übliche Polycarbonsäuren, bzw. deren Anhydride und (Meth)acrylsäure miteinander umgesetzt werden. Die Menge an (Meth)acrylsäure muß dabei so gewählt werden, daß der gewünschte Anteil an (Meth)acryloylgruppen im Endprodukt enthalten ist. Eine weitere Herstellungsmöglichkeit besteht darin, in üblicher Weise aus Polyolen und Polycarbonsäuren, bevorzugt aus Diolen und Dicarbonsäuren OH-funktionelle Polyester herzustellen und die Hydroxylgruppen anschließend mit (Meth)acrylsäure zu verestern oder mit (Meth)acrylsäureestern umzuestern. Desweiteren besteht die Möglichkeit, von glycidylfunktionellen Polyestern auszugehen und die Glycidylgruppen mit (Meth)acrylsäure umzusetzen. Die Polyester enthalten dann bereits Hydroxylgruppen.

Sollen die (meth)acryloylfunktionellen Polyester Hydroxylgruppen enthalten, so kann das auch über eine entsprechende Wahl des OH/COOH-Äquivalentverhältnisses bei der Veresterung geschehen. Die Hydroxylgruppen müssen dann im Überschuß vorliegen. Sollen die (meth)acryloylfunktionellen Polyester Isocyanatgruppen enthalten, so können die vorstehend beschriebenen OH- und (meth)acryloylfunktionellen Polyester mit Polyisocyanaten, bevorzugt Diisocyanaten, im Überschuß umgesetzt werden.

Weiterhin sind als Komponente A) auch (meth)acryloylfunktionelle Epoxidverbindungen einsetzbar. Diese Epoxidverbindungen können in üblicher dem Fachmann bekannter Weise hergestellt werden. Beispielsweise können sie durch Addition von (Meth)acrylsäure an Polyepoxide erhalten werden. Als Polyepoxide kommen dabei z.B. die üblichen aromatischen Epoxidverbindungen auf der Basis Bisphenol A sowie weitere aliphatische und cycloaliphatische Epoxidverbindungen in Frage. Die Epoxidverbindungen haben bevorzugt ein Epoxidäquivalentgewicht von maximal 1000. Die so hergestellten (meth)acryloylfunktionellen Epoxide enthalten bei der Ringöffnung der Epoxidgruppe entstandene Hydroxylgruppen. Sollen die (meth)acryloylfunktionellen Epoxide Isocyanatgruppen enthalten, können die vorhandenen Hydroxylgruppen mit Polyisocyanaten, bevorzugt Diisocyanaten im Überschuß umgesetzt werden.

Die vorstehend beschriebenen für die Komponente A) geeigneten (meth)acryloylfunktionellen Verbindungen können jeweils einzeln oder in Kombination eingesetzt werden. Es ist jedoch darauf zu achten, daß die verschiedenen Komponenten keine miteinander reaktiven funktionellen Gruppen enthalten.

Bei der Komponente B) der Beschichtungsmittel handelt es sich vom Prinzip her um die gleichen Bindemittel mit radikalisch polymerisierbaren Doppelbindungen, bevorzugt in Form von (Meth)acryloylgruppen, wie sie vorstehend für die Komponente A) beschrieben wurden. Der Unterschied besteht jedoch darin, daß die weiteren funktionellen im Sinne einer Additions- und/oder Kondensationsreaktion reaktiven Gruppen dieser Bindemittel komplementär bzw. reaktiv sind zu den im Sinne einer Additions- und/oder Kondensationsreaktion reaktiven Gruppen der Komponente A), jedoch nicht reaktiv sind gegenüber den Gruppen mit radikalisch polymerisierbaren Doppelbindungen.

Die Komponenten A), B) und C) können beispielsweise so funktionalisiert werden, daß neben dem strahlenhärtenden Vernetzungsmechanismus eine Vernetzungsreaktion zwischen OH/NCO, blockiertem Amin/NCO, blockiertem Amin/Epoxidgruppe, Carboxyl-/Epoxidgruppe und/oder OH/Anhydridgruppe ermöglicht wird. Bevorzugt ist ein Vernetzungsmechanismus zwischen Hydroxyl- und Isocyanatgruppen.

Besonders bevorzugte Komponenten A) sind somit (meth)acryloylfunktionelle Hydroxylgruppen enthaltende Polyurethane, Poly(meth)acrylate, Polyester und/oder Polyepoxide. Besonders bevorzugte Komponenten B) sind dann (meth)acryloylfunktionelle Isocyanatgruppen enthaltende Polyurethane, Poly(meth)acrylate, Polyester und Polyepoxide.

Ein Beispiel für eine besonders bevorzugte Kombination von Komponente A) und Komponente B) liegt vor, wenn als Komponente A) (meth)acryloyl- und hydroxyfunktionelle Poly(meth)acrylate, Polyurethane und/oder Polyepoxide und als Komponente B) NCO-funktionelle Urethanverbindungen aus Polyisocyanaten und hydroxyfunktionellen (Meth)acrylsäureestern eingesetzt werden.

Die acryloylfunktionellen radikalisch polymerisierbaren Poly- und Oligomere der Komponenten A) und B) können in Kombination mit radikalisch polymerisierbaren Reaktivverdünnern, d.h. reaktiven polymerisierbaren flüssigen Monomeren, vorliegen. Die Reaktivverdünner werden im allgemeinen in Mengen von 1 bis 50 Gew.-%, bevorzugt 5 bis 30 Gew.-%, bezogen auf das Gesamtgewicht von Poly- und Oligomer und Reaktivverdünner, eingesetzt. Die Reaktivverdünner können mono-, dioder polyungesättigt sein. Beispiele für monoungesättigte Reaktivverdünner sind: (Meth)acrylsäure und deren Ester, Maleinsäure und deren Halbester, Vinylacetat, Vinylether, substituierte Vinylharnstoffe, Styrol, Vinyltoluol. Beispiele für diungesättigte Reaktivverdünner sind: Di(meth)acrylate wie Alkylenglykoldi(meth)acrylat, Polyethylenglykol-di(meth)acrylat, 1,3-Butandiol-di(meth)acrylat, Vinyl(meth)acrylat, Allyl(meth)acrylat, Divinylbenzol, Dipropylenglykoldi(meth)acrylat, Hexandiol-di(meth)acrylat. Beispiele für polyungesättigte Reaktivverdünner sind: Glycerin-tri(meth)acrylat, Trimethylolpropan-tri(meth)acrylat, Pentaerythrit-tri(meth)acrylat, Pentaerythrit-tetra(meth)acrylat. Die Reaktivverdünner können einzeln oder im Gemisch eingesetzt werden. Bevorzugt werden als Reaktivverdünner Diacrylate wie z.B. Dipropylenglykoldiacrylat, Tripropylenglykoldiacrylat und/oder Hexandioldiacrylat eingesetzt.

Die acryloylfunktionellen radikalisch polymerisierbaren Poly- und Oligomere der Komponenten A) und B) können gegebenenfalls auch in Kombination mit weiteren ausschließlich durch radikalische Polymerisation mittels energiereicher Strahlung härtbaren oligomeren und/oder polymeren Bindemitteln ohne weitere funktionelle Gruppen eingesetzt werden. Es handelt sich hier beispielsweise um übliche strahlenhärtbare Polyester, Polyurethane, Poly(meth)acrylate und Epoxid- und Melaminharze mit radikalisch polymerisierbaren Doppelbindungen.

In den Beschichtungsmitteln kann gegebenenfalls die Komponente C) enthalten sein.

Bei der Komponente C) der erfindungsgemäßen Beschichtungsmittel handelt es sich um Verbindungen, die funktionelle Gruppen enthalten, welche im Sinne einer Additions- und/oder Kondensationsreaktion mit den funktionellen reaktiven Gruppen von Komponente A) oder B), nicht jedoch mit den vorliegenden (Meth)acryloylgruppen reagieren können. Bei den in Frage kommenden funktionellen Gruppen kann es sich um Hydroxyl-, Isocyanat-, blockierte Amino-, Carboxyl-, Anhydrid- und/oder Epoxidgruppen handeln. Bevorzugt handelt es sich jedoch um Hydroxyl- oder Isocyanatgruppen.

Die Verbindungen der Komponente C) können verschiedener Natur sein. Es kann sich um höhermolekulare oder niedermolekulare Verbindungen handeln. In Frage kommen beispielsweise auf dem Lackgebiet einsetzbare übliche Polyesterpolyole, Poly(meth)acrylatpolyole, Polycarbonatpolyole, Polyurethanpolyole und/oder Polyesterurethanpolyole. Es können jedoch auch niedermolekulare mehrwertige Alkohole mit einer Molmasse von beispielsweise 60 bis 400 eingesetzt werden.

Weitere als Komponente C) einsetzbare Verbindungen sind Polyisocyanate. Bei der Polyisocyanatkomponente kann es sich um beliebige organische Polyisocyanate mit aliphatisch, cycloaliphatisch, araliphatisch und/oder aromatisch gebundenen freien Isocyanatgruppen handeln. Sie sind bei Raumtemperatur flüssig oder durch Zusatz organischer Lösemittel verflüssigt. Die Polyisocyanate weisen bei 23°C im allgemeinen eine Viskosität von 1 bis 6000 mPas, vorzugsweise über 5 und unter 3000 mPas auf.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation vom überschüssigem Ausgangsdiisocyanat bis auf einen Restgehalt von weniger als 0,5 Gew.-% befreit worden sind.

Ebenfalls sehr gut geeignet sind sterisch behinderte Polyisocyanate, wie z.B. 1,1,6,6-Tetramethyl-hexamethylendiisocyanat, 1,5-Dibutyl-penta-methyldiisocyanat, p- oder m-Tetramethylxylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropan.

Ebenfalls geeignet, jedoch weniger bevorzugt, sind aromatische Polyisocyanate. Beispiele hierfür sind Polyisocyanate auf der Basis von 2,4-Diisocyanatotoluol oder dessen Gemischen mit 2,6-Diisocyanatoluol oder auf der Basis von 4,4'-Diisocyanatodiphenylmethan sowie deren Trimerisate.

Weitere als Komponente C) einsetzbare Verbindungen sind Polyepoxide, beispielsweise aromatische Epoxide auf der Basis Bisphenol A, aber auch glycidylfunktionelle Polymere wie z.B. glycidylfunktionelle Poly(meth)acrylate.

Geeignet sind ferner auch als Komponente C) blockierte Polyamine, z.B. mit Ketonen oder Aldehyden blockierte Poly- und/oder Diamine.

Ebenso als Komponente C) geeignet sind carboxylfuntionelle Polyester, Polyrurethane und/oder Poly(meth)acrylate sowie polyfunktionelle Carbonsäuren.

Die Mengen an Komponente A) und Komponente B) können in weiten Grenzen variieren. Beispielsweise können sie im Verhältnis 10 : 90 bis 90 : 10, bevorzugt 30 : 70 bis 70 : 30 vorliegen. Die Angaben beziehen sich dabei auf den Festkörpergehalt von Komponente A) und Komponente B). Es ist zu beachten, daß die funktionellen Gruppen von Komponente A) und Komponente B) in einer solchen Anzahl vorliegen, daß jeweils ein Äquivalentverhältnis von OH : NCO, blockierte Aminogruppe : NCO, blockierte Aminogruppe : Epoxidgruppe, Carboxylgruppe : Epoxidgruppe und OH : Anhydridgruppe von 1 : 4 bis 4 : 1, bevorzugt 1 : 2 bis 2 : 1 vorliegt. Wird die Komponente C) mitverwendet, sind deren funktionelle Gruppen entsprechend miteinzubeziehen.

Die Beschichtungsmittel können auf wäßriger oder lösemittelhaltiger Basis bestehen. Handelt es sich um wäßrige Beschichtungsmittel, müssen Maßnahmen getroffen werden, um die Wasserverdünnbarkeit der Bindemittel zu gewährleisten. Bevorzugt werden zur Erzielung einer ausreichenden Wasserverdünnbarkeit Emulgatoren, besonders bevorzugt nicht ionische Emulgatoren, eingesetzt.

Die unter Strahleneinwirkung härtbaren Beschichtungsmittel enthalten Photoinitiatoren. Durch Einwirkung energiereicher Strahlung auf die Photoinitiatoren entstehen Radikale, die dann die Vernetzungreaktion auslösen. Geeignete Photoinitiatoren sind beispielsweise solche, die im Wellenlängenbereich von 190 bis 600 nm absorbieren.

Beispiele für Photoinitiatoren für radikalisch härtende Systeme sind Benzoin und - derivate, Acetophenon und -derivate, wie z.B. 2,2-Diacetoxyacetophenon, Benzophenon und -derivate, Thioxanthon und -derivate, Anthrachinon, 1-Benzoylcyclohexanol, phosphororganische Verbindungen, wie z.B. Acylphosphinoxide. Die Photoinitiatoren werden beispielsweise in Mengen von 0,1 bis 7 Gew.-%, bevorzugt 0,5 bis 5 Gew.-% eingesetzt, bezogen auf die Summe von radikalisch polymerisierbaren Prepolymeren, Reaktivverdünnern und Photoinitiatoren. Die Photoinitiatoren können einzeln oder in Kombination eingesetzt werden. Außerdem können weitere synergistische Komponenten, z.B. tertiäre Amine, eingesetzt werden.

Die Beschichtungsmittel können zusätzliche, für die Lackformulierung übliche Komponenten enthalten. Sie können z.B. lackübliche Additive enthalten. Bei den Additiven handelt es sich um die üblichen auf dem Lacksektor einsetzbaren Additive. Beispiele für solche Additive sind Verlaufsmittel, z.B. auf der Basis von (Meth)acryl-Homopolymerisaten oder Silikonölen, Antikratermittel, Antischaummittel, Katalysatoren, Haftvermittler, rheologiebeeinflussende Additive, Verdicker, Lichtschutzmittel. Die Additive werden in üblichen, dem Fachmann geläufigen Mengen eingesetzt.

Die Beschichtungsmittel können organische Lösemittel und/oder Wasser enthalten. Bei den Lösemitteln handelt es sich um übliche lacktechnische Lösemittel. Diese können aus der Herstellung der Bindemittel stammen oder werden separat zugegeben. Beispiele für solche Lösemittel sind ein- oder mehrwertige Alkohole, z.B. Propanol, Butanol, Hexanol; Glykolether oder - ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere, Ester, wie z.B. Butylacetat und Amylacetat, N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe. Bei Einsatz von NCO-funktionellen Bindemitteln sollten als Lösungsmittel bevorzugt solche eingesetzt werden, die keine aktiven Wasserstoffatome enthalten.

In den Beschichtungsmitteln können Pigmente und/oder Füllstoffe enthalten sein. Es handelt sich dabei um die üblichen in der Lackindustrie einsetzbaren Füllstoffe und organischen oder anorganischen farb- und/oder effektgebenden Pigmente und Korrosionsschutzpigmente. Beispiele für anorganische oder organische Farbpigmente sind Titandioxid, mikronisiertes Titandioxid, Eisenoxidpigmente, Ruß, Azopigmente, Phthalocyaninpigmente, Chinacridon- und Pyrrolopyrrolpigmente. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente. Beispiele für Füllstoffe sind Siliciumdioxid, Aluminiumsilikat, Bariumsulfat und Talkum.

In den Beschichtungsmitteln können vorteilhafterweise neben den üblichen Additiven spezielle überzogene transparente Füllstoffe zur Erhöhung der Kratzfestigkeit enthalten sein. Als Füllstoffe kommen hier z.B. micronisiertes Aluminiumoxid oder micronisierte Siliciumoxide in Frage. Diese transparenten Füllstoffe sind mit Verbindungen überzogen, die UV-härtbare Gruppen enthalten, z.B. mit acrylfunktionellen Silanen, und werden somit bei der Strahlenhärtung des Klarlackes mit einbezogen. Die Füllstoffe sind als Handelsprodukte, z.B. unter dem Namen AKTISIL®, erhältlich.

Die Beschichtungsmittel werden erfindungsgemäß angewendet zur Herstellung einer mehrschichtigen Lackierung auf dem Gebiet der Fahrzeug-, insbesondere der Fahrzeugreparaturlackierung. Die Beschichtungsmittel werden dabei als Füller, Basislack, Klarlack und/oder Einschichtdecklack eingesetzt. Bevorzugt werden sie als Füller, Klarlack oder als pigmentierter Einschichtdecklack eingesetzt.

Bei den Beschichtungsmitteln ist es erforderlich, daß Komponente A) und Komponente B) getrennt gelagert werden, um eine vorzeitige Vernetzungsreaktion zu unterbinden. Die Komponente C) kann dabei je nach Art der reaktiven Gruppen mit der Komponente A) oder der Komponente B) gemeinsam gelagert werden. Erst kurz vor der Applikation werden die getrennt gelagerten Komponenten, gegebenenfalls mit Pigmenten, Füllstoffen und lacküblichen Additiven gründlich miteinander vermischt. Dann kann gegebenenfalls noch mit organischen Lösemitteln und/oder Wasser auf Spritzviskosität eingestellt werden.

Der Auftrag der Beschichtungsmittel kann in einem Verfahren zur Mehrschichtlackierung auf gegebenenfalls vorbeschichtete Substrate erfolgen. Bevorzugte Substrate sind Metall- oder Kunststoffsubstrate. Die Substrate können mit üblichen Grundierungs- oder weiteren Zwischenschichten, wie sie für die Mehrschichtlackierung auf dem Kraftfahrzeugsektor verwendet werden, beschichtet sein. Die Applikation im Mehrschichtaufbau erfolgt nach üblichen Verfahren, bevorzugt mittels Spritzauftrag. Bei sehr kleinen Schadstellen ist auch möglich, den erfindungsgemäßen Lack aufzutüpfeln.

Die Härtung der Beschichtungsmittel erfolgt einerseits mittels energiereicher Strahlung, bevorzugt mittels UV-Strahlung. Als UV-Strahlungsquellen werden bevorzugt solche mit Emissionen im Wellenlängenbereich von 180 bis 420 nm, insbesondere von 200 bis 400 nm eingesetzt. Beispiele für derartige UV-Strahlungsquellen sind gegebenenfalls dotierte Quecksilberhochdruck-, mitteldruckund niederdruckstrahler, Gasentladungsröhren, wie z.B. Xenonniederdrucklampen, gepulste und ungepulste UV-Laser, UV-Punktstrahler, wie z.B. UV-emittierende Dioden und Schwarzlichtröhren. Bevorzugt erfolgt die Bestrahlung mit gepulster UV-Strahlung. Als Strahlungsquelle werden dann besonders bevorzugt sogenannte Hochenergieelektronen-Blitzeinrichtungen (kurz: UV-Blitzlampen) eingesetzt.

Bevorzugte UV-Blitzlampen emittieren Licht einer Wellenlänge von 200 bis 900 nm.

Die UV-Blitzlampen enthalten bevorzugt einen Mehrzahl von Blitzröhren, beispielsweise mit inertem Gas, wie Xenon, gefüllte Quarzröhren. Die UV-Blitzlampen sollen an der Oberfläche des zu härtenden Überzuges eine Beleuchtungsstärke von mindestens 10 Megalux, bevorzugt von 10 bis 80 Megalux pro Blitzentladung bewirken. Die Energie pro Blitzentladung soll bevorzugt 1 bis 10 kJoule betragen. Bei den UV-Blitzlampen handelt es sich bevorzugt um transportable Einrichtungen, die direkt vor einer auszubessernden Schadstelle positioniert werden können. Je nach den Gegebenheiten sind ein oder mehrere UV-Blitzlampen einsetzbar. Einsetzbare UV-Blitzlampen sind beispielsweise beschrieben in der WO-A-9411123 und in der EP-A-525 340. UV-Blitzlampen sind im Handel erhältlich.

Die Trocknung bzw. Härtung der applizierten Beschichtungsmittel kann durch eine Mehrzahl aufeinanderfolgender Blitzentladungen erfolgen. Bevorzugt werden 1 bis 40 aufeinanderfolgende Blitzentladungen ausgelöst. Der Abstand der UV-Blitzlampe zur zu bestrahlenden Substratoberfläche kann dabei in Abhängigkeit von Lampenart und Lampenleistung beispielsweise 5 - 70 cm betragen. Die Abschirmung der UV-Lampen zur Vermeidung von Strahlungsaustritt kann dabei z.B. durch Verwendung eines entsprechend ausgekleideten Schutzgehäuses um die transportable Lampeneinheit oder mit Hilfe anderer, dem Fachmann bekannter Sicherheitsmaßnahmen, erfolgen.

Die Bestrahlungsdauer liegt insgesamt im Bereich weniger Sekunden, beispielsweise im Bereich von 1 Millisekunde bis 600 Sekunden, bevorzugt von 4 bis 320 Sekunden, je nach Anzahl der gewählten Blitzentladungen. Die Blitze können beispielsweise ca. alle 4 Sekunden ausgelöst werden. Die UV-Blitzlampen sind jederzeit sofort einsatzbereit, d.h. sie bedürfen keiner Einbrennzeit und können zwischen zwei zeitlich etwas auseinanderliegenden Härtungs- bzw. Bestrahlungsvorgängen ausgeschaltet bleiben, ohne beim erneuten Bestrahlungsvorgang durch die Einbrennphase zeitliche Verluste hinnehmen zu müssen.

Bei der Bestrahlung der Beschichtungen mittels UV-Strahlung, insbesondere mit UV-Blitzlampen, werden auf der Beschichtung im allgemeinen solche Temperaturen erzeugt, die schon zu einer Härtung bzw. teilweisen Härtung über den zusätzlichen Vernetzungsmechanismus führen können.

Zur Härtung der Beschichtungsmittel über den zusätzlichen Vernetzungsmechanismus können die Beschichtungen nach dem Bestrahlungsvorgang zur vollständigen Aushärtung beispielsweise bei Raumtemperatur belassen werden, z.B. für 16 - 24 Stunden. Es ist jedoch auch möglich die vollständige Härtung bei höheren Temperaturen von beispielsweise 30 bis 120°C, bevorzugt 40 bis 80°C durchzuführen. Die vollständige Härtung kann nach üblichen Methoden z.B. in einer beheizten Kabine oder mittels IR-Strahlung erfolgen. Je nach Härtungstemperatur sind Härtungszeiten von z.B. 10 bis 60 Minuten möglich.

Werden die Beschichtungsmittel als Füller eingesetzt, dann können sie auf bereits vorbeschichtete bzw. vorbehandelte Substrate aufgebracht werden, sie können jedoch auch auf Altlackierungen aufgebracht werden. Sie können beispielsweise auf übliche lösemittel- oder wasserbasierende Spachtel, Grundierungen, Haftprimer oder weitere Zwischenschichten, wie sie für die Fahrzeuglackierung üblich sind, aufgebracht werden.

Werden die Beschichtungsmittel als Klarlacke im Mehrschichtaufbau eingesetzt, so kann der Klarlack dann auf einen lösemittel- oder wasserbasierenden Basislack aufgebracht werden.

Werden die Beschichtungsmittel als pigmentierter Decklack eingesetzt, so können sie auf üblichen wasser- oder lösemittelbasierende Füllerschichten aufgebracht werden.

Nach der jeweiligen Applikation kann eine Ablüftphase von z. B. 5 - 60 Minuten angeschlossen werden. Die gewählte Zeit ist beispielsweise vom Lacksystem (Lösemittel-basierend oder wäßrig) und von der Schichtdicke abhängig. Nach dem Ablüften erfolgt die Bestrahlung mit UV-Strahlen und es kann sich die vorstehend beschriebene weitere Härtung anschließen.

Die Beschichtungsmittel können im Mehrschichtaufbau jeweils nur für eine Füller-, Basislack-, Klarlack- und Decklackschicht allein eingesetzt werden. Sie können jedoch in einem Mehrschichtaufbau auch gleichzeitig für mehrere verschiedene Lackschichten eingesetzt werden. Die Strahlungshärtung der einzelnen Schichten kann dabei jeweils mit unterschiedlicher Strahlungsintensität und unterschiedlicher Bestrahlungsdauer sowie unterschiedlicher Anzahl von Blitzentladungen für jede Schicht einzeln oder für zwei oder mehr Schichten gemeinsam erfolgen. Im letzteren Fall kann gegebenenfalls eine kurze Zwischenhärtung, z.B. eine Zwischenbestrahlung mit 1 bis 2 Blitzentladungen, erfolgen.

Mit den Beschichtungsmitteln erhält man Beschichtungen mit hoher Kratzfestigkeit und sehr guter Chemikalien-, Benzin- und Lösemittelbeständigkeit. Die Beschichtungen zeigen keine Rißbildung, was auf eine gleichmäßige Durchhärtung schließen läßt. Die Zwischenschichthaftung ist sehr gut, insbesondere die Haftung von erfindungsgemäßen Klarlacken auf konventionellen und Wasserbasislacken.

Die Beschichtungsmittel können vorteilhaft eingesetzt werden in der Fahrzeuglackierung, insbesondere in der Fahrzeugreparaturlackierung, z.B. bei der Reparatur von Fahrzeugteilen, kleineren Schadstellen oder zum Spotrepair. Sie können jedoch auch zur Reparatur in der Fahrzeugserienlackierung eingesetzt werden.

### Beispiel

### Herstellung eines acryloyl- und NCO-funktionellen Bindemittels

### (Komponente A)

In einem 2 1-Dreihalskolben, ausgestattet mit Rührer, Thermometer und Tropftrichter werden 667 Gew.-Teile Isophorondiisocyanat-Isocyanurat mit 378 Gew.-Teilen Solvesso®100 versetzt. Nachdem das Polyisocyanat gelöst ist, erfolgt die Zugabe von 13 Gew.-Teilen Neopentylglykol. Anschließend wird auf 80°C geheizt. Es wird bei 80°C gehalten bis eine NCO-Zahl von 10 erreicht ist. Dann erfolgt die Zugabe von 0,8 Gew.-Teilen Methylhydrochinon. Bei 80°C wird ein Gemisch aus 198 Gew.-Teilen Butandiolmonoacrylat und 0,1 Gew.-Teilen Dibutylzinndilaurat über einen Zeitraum von 30 Minuten zugetropft. Anschließend wird bei 80°C gehalten, bis eine NCO-Zahl von 4 erreicht ist.

Man erhält eine farblose, viskose Flüssigkeit mit einem Feststoffgehalt von 69,4 % (1 h/125°C), einem NCO-Äquivalentgewicht von 735 g Festharz sowie einem Acryloyläquivalentgewicht von 640 g Festharz.

### Herstellung eines Klarlackes

Folgende Komponenten werden miteinander vermischt und mittels Schnellrührer einige Minuten homogenisiert:

| | |
|---|---|
| 29,0 Gew.-Teile | des vorstehend hergestellten acryloyl- und NCO-funktionellen Bindemittels |
| 53,0 Gew.-Teile | eines handelsüblichen acryloyl- und OH-funktionellen Acrylatharzes (Jägalux®UV 5154 B) |
| 0,3 Gew.-Teile | eines handelsüblichen Verlaufmittels |
| 2,0 Gew.-Teile | eines handelsüblichen Photoinitiators (Irgacur 184) |
| 33,0 Gew.-Teile | Butylacetat |
| 0,4 Gew.-Teile | eines handelsüblichen Lichtschutzmittels (HALS-Typ) |
| 0,2 Gew.-Teile | eines handelsüblichen UV-Absorbers |

Der so hergestellte Klarlack wurde auf ein in üblicher Weise mit Füller und Wasserbasislack beschichtetes Blech in einer resultierenden Trockenfilmschichtdicke von 60 µm aufgebracht.

Nach einer Ablüftzeit von 10 Minuten bei Raumtemperatur wurde die Klarlackschicht der Bestrahlung durch eine UV-Blitzlampe (3500 Ws) ausgesetzt. Es wurde mit 20 Blitzen (ca. 80 s) bestrahlt. Anschließend wird noch 10 Minuten bei 60°C nachgehärtet.

Die erhaltene Beschichtung zeigt keine Rißbildung. Die Haftung auf dem Wasserbasislack ist sehr gut, auch nach Belastung im Feucht/Warm-Test.

## Patentansprüche

1. Verwendung eines Beschichtungsmittels, welches mittels energiereicher Strahlung härtbar ist, und
A) ein oder mehrere radikalisch polymerisierbare Doppelbindungen aufweisende (meth)acryloylfunktionelle oligomere und/oder polymere Verbindungen auf Poly(meth)acrylat-, Polyurethan-, Polyester-, Polyesterurethan und/oder Epoxidharzbasis, die zusätzlich mindestens eine weitere, im Sinne einer Additionsund/oder Kondensationsreaktion reaktive funktionelle Gruppe enthalten,
B) ein oder mehrere radikalisch polymerisierbare Doppelbindungen aufweisende (meth)acryloylfunktionelle oligomere und/oder polymere Verbindungen auf Poly(meth)acrylat-, Polyurethan-, Polyester-, Polyesterurethan und/oder Epoxidharzbasis, die zusätzlich mindestens eine weitere, im Sinne einer Additionsund/oder Kondensationsreaktion reaktive funktionelle Gruppe enthalten, wobei die zusätzliche reaktive funktionelle Gruppe komplementär bzw. reaktiv gegenüber den zusätzlichen reaktiven funktionellen Gruppen der Komponente A) ist,
C) gegebenenfalls mindestens eine monomere, oligomere und/oder polymere Verbindung mit mindestens einer gegenüber den zusätzlich zu den radikalisch polymerisierbaren Doppelbindungen vorhandenen funktionellen Gruppen aus Komponente A) oder Komponente B) im Sinne einer Additions- und/oder Kondensationsreaktion reaktiven funktionellen Gruppe,
D) ein oder mehrere Photoinitiatoren sowie
E) gegebenenfalls Lösemittel, Wasser, Pigmente und/oder Füllstoffe sowie lackübliche Additive enthält, wobei Komponente A) und Komponente B) verschieden voneinander sind und Komponente C) keine radikalisch polymerisierbaren Doppelbindungen enthält, in einem Verfahren zur Herstellung von Mehrschichtlackierungen bei der Fahrzeuglackierung, wobei die Beschichtungsmittel als Füller, Basislack, Klarlack und/oder pigmentierter Einschichtdecklack eingesetzt werden.

2. Verwendung gemäß Anspruch 1, **dadurch gekennzeichnet, dass** die Verbindungen der Komponente A) und/oder B) (meth)acryloylfunktionelle Verbindungen mit einer mittleren Molmasse von 800 bis 10000 sind, wobei mindestens zwei polymerisierbare Doppelbindungen in Form von (Meth)acryloyl-Gruppen im Molekül enthalten sind.

3. Verwendung gemäß einem der Ansprüche 1 oder 2, **dadurch gekennzeichnet, dass** die Komponenten A), B) und C) so funktionalislert sind, dass neben der Strahlenhärtung eine Vernetzung der Komponenten durch Reaktion zwischen einer Hydroxygruppe und einer Isocyanatgruppe, einem blockierten Amin und einer Isocyanatgruppe, einem blockierten Amin und einer Epoxidgruppe, einer Carboxyl- und einer Epoxidgruppe und/oder einer Hydroxygruppe und einer Anhydridgruppe stattfindet, wobei das Verhältnis dieser Gruppen zueinander 1:4 bis 4:1 beträgt.

4. Verwendung gemäß einem der Ansprüche 1 bis 3, **dadurch gekennzeichnet, dass** die Verbindungen der Komponente A) (meth)acryloylfunktionelle Hydroxylgruppen enthaltende Polyurethane, Poly(meth)acrylate, Polyester und/oder Polyepoxide mit OH-Zahlen von 20 - 200 mg KOH/g und die Verbindungen der Komponente B) (meth)acryloylfunktionelle Isocyanatgruppen enthaltende Polyurethane, Poly(meth)acrylate, Polyester und/oder Polyepoxide mit einem NCO-Gehalt von 2 - 30 Gew.-% sind.

5. Verwendung gemäß einem der Ansprüche 1 bis 4, **dadurch gekennzeichnet, dass** die Komponenten A) und B) in Kombination mit radikalisch polymerisierbaren Reaktivverdünnern vorliegen, wobei die Menge an Reaktivverdünner 1 bis 50 Gew.-% bezogen auf das Gesamtgewicht von Poly und Oligomer und Reaktivverdünner beträgt.

6. Verwendung gemäß einem der Ansprüche 1 bis 5, **dadurch gekennzeichnet, dass** die Verbindungen der Komponente C) Polyisocyanate sind, welche eine Viskosität von 1 bis 6000 mPas und eine mittlere NCO-Funktionalität von 1,5 bis 5 besitzen.

7. Verwendung gemäß einem der Ansprüche 1 bis 6, **dadurch gekennzeichnet, dass** die Verbindungen der Komponente C) Polyester-, Poly(meth)acrylat, Polyurethan- und/oder Polycarbonatpolyole mit einer OH-Zahl von 20 - 250 mg KOH/g sind.

8. Verwendung nach einem der Ansprüche 1 - 7 zur Fahrzeugreparaturlackierung.

## Claims

1. Use of a coating compound, which can be cured by high-energy radiation and contains
A) one or more (meth)acryloyl-functional, oligomeric and/or polymeric compounds based on poly(meth)acrylate, polyurethane, polyester, polyester urethane and/or epoxy resin, which exhibit double bonds capable of free-radical polymerisation and additionally contain at least one further functional group which is reactive in the sense of an addition and/or condensation reaction,
B) one or more (meth)acryloyl-functional, oligomeric and/or polymeric compounds based on poly(meth)acrylate, polyurethane, polyester, polyester urethane and/or epoxy resin, which exhibit double bonds capable of free-radical polymerisation and additionally contain at least one further functional group which is reactive in the sense of an addition and/or condensation reaction, the additional reactive functional group being complementary or reactive in relation to the additional reactive functional groups of component A),
C) optionally at least one monomeric, oligomeric and/or polymeric compound with at least one functional group which is reactive, in the sense of an addition and/or condensation reaction, towards the functional groups from component A) or component B) present in addition to the double bonds capable of free-radical polymerisation,
D) one or more photoinitiators, and
E) optionally solvents, water, pigments and/or fillers together with conventional lacquer additives,
wherein component A) and component B) are different from one another and component C) contains no double bonds capable of free-radical polymerisation, in a process for the production of multi-layer lacquer coatings in vehicle lacquering, the coating compounds being used as a filler, base coat, clear lacquer and/or pigmented one-coat finish.

2. Use according to claim 1, **characterised in that** the compounds of component A) and/or B) are (meth)acryloyl-functional compounds with an average molecular weight of 800 to 10000, at least two polymerisable double bonds being contained in the molecule in the form of (meth)acryloyl groups.

3. Use according to either of claims 1 or 2, **characterised in that** the components A), B) and C) are functionalised in such a way that, in addition to the radiation curing, a crosslinking of the components takes place by reaction between a hydroxy group and an isocyanate group, a blocked amine and an isocyanate group, a blocked amine and an epoxy group, a carboxyl and an epoxy group and/or a hydroxy group and an anhydride group, the ratio between these groups being 1:4 to 4:1.

4. Use according to any one of claims 1 to 3, **characterised in that** the compounds of component A) are polyurethanes, poly(meth)acrylates, polyesters and/or polyepoxides containing (meth)acryloyl-functional hydroxyl groups with OH values of 20 - 200 mg KOH/g and the compounds of component B) are polyurethanes, poly(meth)acrylates, polyesters and/or polyepoxides containing (meth)acryloyl-functional isocyanate groups with an NCO content of 2 - 30 wt.%.

5. Use according to any one of claims 1 to 4, **characterised in that** the components A) and B) are present in combination with reactive thinners capable of free-radical polymerisation, the quantity of reactive thinner being 1 to 50 wt.%, based on the total weight of poly and oligomer and reactive thinner.

6. Use according to any one of claims 1 to 5, **characterised in that** the compounds of component C) are polyisocyanates, which possess a viscosity of 1 to 6000 mPas and an average NCO functionality of 1.5 to 5.

7. Use according to any one of claims 1 to 6, **characterised in that** the compounds of component C) are polyester, poly(meth)acrylate, polyurethane and/or polycarbonate polyols with an OH value of 20 - 250 mg KOH/g.

8. Use according to any one of claims 1 to 7 for vehicle refinishing.

## Revendications

1. Utilisation d'un agent de revêtement, ledit agent étant durcissable par rayonnement riche en énergie, et contenant
A) des composés oligomères et/ou polymères, ayant des groupes fonctionnels (méth)acryloyle, présentant une ou plusieurs doubles liaisons polymérisables par voie radicalaire, à base de poly(méth)acrylate, polyuréthane, polyester, polyesteruréthane et/ou résine époxyde, qui contiennent en plus au moins un autre groupe fonctionnel réactif au sens d'une réaction d'addition et/ou de condensation,
B) des composés oligomères et/ou polymères, ayant des groupes fonctionnels (méth)acryloyle, présentant une ou plusieurs doubles liaisons polymérisables par voie radicalaire, à base de poly(méth)acrylate, polyuréthane, polyester, polyesteruréthane et/ou résine époxyde, qui contiennent en plus au moins un autre groupe fonctionnel réactif au sens d'une réaction d'addition et/ou de condensation, le groupe fonctionnel réactif supplémentaire étant complémentaire ou réactif par rapport aux groupes fonctionnels réactifs supplémentaires du composant A),
C) éventuellement au moins un composé monomère, oligomère et/ou polymère ayant au moins un groupe fonctionnel réactif au sens d'une réaction d'addition et/ou de condensation vis à vis des groupes fonctionnels provenant du composant A) ou du composant B) présents en plus des doubles liaisons polymérisables au niveau radicalaire,
D) un ou plusieurs photoinitiateurs et
E) éventuellement des solvants, de l'eau, des pigments et/ou des charges et des additifs usuels pour les laques, le composant A) et le composant B) étant différents l'un de l'autre et le composant C) ne contenant aucune double liaison polymérisable au niveau radicalaire, dans un procédé de production de laquages multicouches pour la mise en peinture des véhicules, les agents de revêtement étant mis en oeuvre comme charge, apprêt, vernis et/ou émail final monocouche pigmenté.

2. Utilisation selon la revendication 1, **caractérisée en ce que** les composés des composants A) et/ou B) sont des composés ayant des groupes (méth)acryloyle avec une masse molaire moyenne de 800 à 10000, au moins deux doubles liaisons polymérisables étant présentes sous forme de groupes (méth)acryloyle dans la molécule.

3. Utilisation selon l'une quelconque des revendications 1 ou 2, **caractérisée en ce que** les composants A), B) et C) sont fonctionnalisés de manière à ce que, hormis le durcissement par rayonnement, une réticulation des composants par réaction entre un groupe hydroxy et un groupe isocyanate, une amine bloquée et un groupe isocyanate, une amine bloquée et un groupe époxyde, un groupe carboxyle et un groupe époxyde et/ou un groupe hydroxy et un groupe anhydride se produise, le rapport de ces groupes l'un par rapport à l'autre allant de 1 : 4 à 4 : 1.

4. Utilisation selon l'une quelconque des revendications 1 à 3, **caractérisée en ce que** les composés du composant A) sont des polyuréthanes, poly(méth)acrylates, polyesters et/ou polyépoxydes, contenant des groupes hydroxyles ayant des fonctionnalités (méth)acryloyle, avec des nombres OH de 20 à 200 mg KOH/g et les composés des composants B) sont des polyuréthanes, poly(méth)acrylates, polyesters et/ou polyépoxydes, contenant des groupes isocyanates ayant des fonctionnalités (méth)acryloyle, avec une teneur en NCO allant de 2 à 30 % en poids.

5. Utilisation selon l'une quelconque des revendications 1 à 4, **caractérisée en ce que** les composants A) et B) se présentent en combinaison avec des diluants réactifs polymérisables au niveau radicalaire, la quantité de diluants réactifs allant de 1 à 50 % en poids sur le poids total des poly- et oligomères et des diluants réactifs.

6. Utilisation selon l'une quelconque des revendications 1 à 5, **caractérisée en ce que** les composés du composant C) sont des polyisocyanates qui possèdent une viscosité allant de 1 à 6000 mPas et une fonctionnalité NCO moyenne de 1,5 à 5.

7. Utilisation selon l'une quelconque des revendications 1 à 6, **caractérisée en ce que** les composés du composant C) sont des polyols de polyesters, poly(méth)acrylate, polyuréthane et/ou polycarbonate avec un nombre OH allant de 20 à 250 mg KOH/g.

8. Utilisation selon l'une quelconque des revendications 1 à 7 pour le laquage de réparation des automobiles.
